# EUROPÄISCHE PATENTSCHRIFT

(11) **EP 1 826 100 B1**
(45) Veröffentlichungstag und Bekanntmachung des Hinweises auf die Patenterteilung: **23.01.2013**
(21) Anmeldenummer: 07003531.6
(22) Anmeldetag: 21.02.2007
(51) Int. Cl.: B62D 21/11, B62D 21/02, B60G 21/05

(54) **Querträgerverbund für ein luftgefedertes Nutzfahrzeug**
Cross member arrangment for a utility vehicle with pneumatic suspension
Montage composite pour un véhicule utilitaire à suspension pneumatique

(30) Priorität: 28.02.2006 AT 3292006
(43) Veröffentlichungstag der Anmeldung: 29.08.2007
(73) Patentinhaber: MAN Truck & Bus Österreich AG, 4400 Steyr (AT)
(72) Erfinder: Breitling, Ulrich, Dr., 81245 München (DE); Mekina, Markus, Ing., 4400 Steyr (AT); Keppel, Manfred, 7540 Guessing (AT); Wagner, Joachim, 3363 Ulmerfeld (AT); Just, Robert, Dipl.-Ing., 85256 Vierkirchen (DE)

(56) Entgegenhaltungen:
- EP-A- 1 241 077
- WO-A-02/053447
- US-A- 3 243 007
- US-A- 6 116 626
- US-B1- 6 516 914

## Beschreibung

### Technisches Gebiet:

Die Erfindung betrifft einen Querträgerverbund für ein zumindest teilweise luftgefedertes Nutzfahrzeug mit zwei in Längsrichtung verlaufenden Rahmenlängsträgern, der über zwei jeweils an Außenseiten der Rahmenlängsträger befestigbare Luftfederhalter sowie über ein unterhalb der Rahmenlängsträger und annähernd in Querrichtung zu den Rahmenlängsträgern verlaufendes Verbindungselement, das die beiden Luftfederhalter miteinander verbindet, verfügt.

### Stand der Technik:

Im Bereich der Nutzfahrzeugtechnik sind eine Vielzahl von Möglichkeiten bekannt, innerhalb eines Fahrgestells eines insbesondere schweren Nutzfahrzeugs die Aufhängung einer Starrachse einschließlich Federung und Dämpfung zu realisieren. So ist bspw. aus der DE 21 42 079 A1 eine Achsaufhängung für Kraftfahrzeuge bekannt, die einen aus einer Starrachse bestehenden Radträger mit zwei Führungsarmen aufweist, deren jeweiliges Vorderende fest mit der Achse verbunden ist und deren jeweiliges hinteres Ende für eine Schwenkverbindung mit der gefederten Masse des Fahrzeugs ausgebildet ist. Zwischen der gefederten Masse des Fahrzeugs und der Radhalterung sind bei dieser technischen Lösung weiterhin Aufhängungselemente eingefügt.

Die beschriebene Luft- oder Schraubengefederte Verbundlenker-Vorderachse mit einem Starrachskörper und zwei fest mit diesem verbundenen Längslenkern verfügt ferner zur Querführung über einen Panhardstab, der auf der einen Seite am Längslenker und auf der gegenüberliegenden anderen Seite an der gefederten Masse des Fahrzeugs angelenkt ist.

Darüber hinaus beschreibt die EP 0 940 324 B1 ein Fahrgestell eines schweren Nutzfahrzeugs mit einem Rahmen, dessen beide Längsträger über mehrere Querträger miteinander verbunden sind, und mit mehreren Achsen, von denen wenigstens eine eine Starrachse ist. Über den Starrachskörper der Starrachse erstreckt sich ein von vorne gesehen U-förmiger Querträger, der mit seiner Quertraverse dachbildend auch einen darunter verlaufenden Panhartstab überbrückt. Wesentlich hierbei ist, dass der U-förmige Querträger aus drei Teilen besteht, nämlich der Quertraverse und zwei an deren Enden befestigte Federbeinhalter. Der U-förmige Querträger ist hierbei jeweils beidseitig mit den Federbeinhaltern verbunden, die wiederum an den Rahmenlängsträgern befestigt sind. Einer der beiden Federbeinhalter ist über seine anderen Funktionen hinaus auch noch als rahmenfester Halter für den Panhardstab vorgesehen und für dessen Anlenkung an seinen unteren Bereich entsprechend ausgebildet.

Aus der WO 02/053447 A2 ist weiterhin ein Querträgerverbund bekannt, bei dem der Querträger zusammen mit einem Luftfederhalter seitlich an einen kastenförmige Längsrahmen angebunden ist.

Weiterhin ist aus der US 6,116,626 ein Querträgerverbund bekannt, der an der Unterseite eines Fahrzeuglängsrahmens befestigt wird, wobei zusätzlich ein Luftfederhalter seitlich an dem Fahrzeuglängsrahmen befestigt ist.

Ausgehend von dem bekannten Stand der Technik liegt der Erfindung die Aufgabe zugrunde, einen Querträgerverbund für ein zumindest teilweise luftgefedertes Nutzfahrzeug anzugeben, der die Aufhängung einer Starrachse einschließlich Federung und Dämpfung auf möglichst platzsparende Weise ermöglicht, so dass einerseits ein hoher Fahr- und Federungskomfort erreicht wird und andererseits im Bereich der Starrachse ein hinreichend groder Freiraum über deren Mittelabschnitt sowie stabile Rahmenverhältnisse erreicht werden. Ein entsprechender Querträgerverbund soll weiterhin gegenüber den bekannten technischen Lösungen insbesondere im Hinblick auf die Fertigungskosten sowie das Gewicht optimiert sein.

Die zuvor genannte Aufgabe wird mit einem Querträgerverbund durch die im Anspruch 1 angegebenen Merkmale gelöst. Vorteilhafte Ausführungsformen sind Gegenstand der Unteransprüche und werden in der Beschreibung unter Bezugnahme auf die Figuren näher erläutert.

Erfindungsgemäß ist ein Querträgerverbund für ein zumindest teilweise luftgefedertes Nutzfahrzeug mit zwei in Längsrichtung verlaufenden Rahmenlängsträgern, der über zwei jeweils an Außenseiten der Rahmenlängsträger befestigte Lüftfederhalter sowie über ein unterhalb der Rahmenlängsträger und annähernd in Querrichtung zu den Rahmenlängsträgern verlaufendes Verbindungselement, das die beiden Luftfederhalter miteinander verbindet, verfügt, derart weitergebildet worden, dass das Verbindungselement ein Mittelteil und zwei jeweils an gegenüberliegenden Enden des Mittelteils befestigte Brückenteile aufweist, wobei die Brückenteile in einem dem Mittelteil abgewandten Bereich an den Luftfederhaltern und zusätzlich jeweils am Untergurt der Rahmenlängsträger befestigt sind.

Mit einem erfindungsgemäß ausgeführten Querträgerverbund ist es möglich, ein derartiges Bauteil für ein Fahrgestell eines schweren Nutzfahrzeugs zu realisieren, mit dem erhebliche Gewichtseinsparungen möglich sind. Hierbei zeichnet sich der erfindungsgemäße Querträgerverbund vor allem dadurch aus, dass er aus mehreren einzelnen Komponenten zusam mengebaut wird, die hinsichtlich ihrer Gestaltung, Anordnung sowie im Hinblick auf die festigkeitsmäßige Auslegung optimiert ausgeführt werden. Aufgrund der speziellen Ausführungsform der Brückenteile des Verbindungselementes, die am Untergurt des Fahrzeugrahmens befestigt werden, wobei in diesem Bereich auch eine Befestigung des Luftfederhalters an den Brückenteilen realisiert wird, wird eine besonders geeignete Krafteinleitung in den Querträgerverbund erreicht.

Die Erfindung zeichnet sich weiterhin vorteilhafterweise durch die Verwendung weitestgehend gerader Bauteile und den Einsatz von Querabstützungen an unvermeidbaren Knickstellen für einen Querträgerverbund im Bereich einer Starrachse aus. Die Überleitung von Kräften zwischen den einzelnen Komponenten des Querträgerverbundes erfolgt vorzugsweise mit Hilfe von Schraubverbindungen, wobei diese in einer speziellen Ausführungsform derart hergestellt werden, dass die Schraubverbindungen Schubbelastungen aufnehmen. Dies ermöglicht eine hohe Belastbarkeit durch Ausnutzung der Scherkraftgrenze bei Anlage des Schraubenschaftes in der Bohrung unter einseitiger Last. Ebenso oder in Ergänzung hierzu ist es denkbar, innerhalb des Querträgerverbundes mehrseitig ausgesteifte Membranflächen zur Aufnahme entsprechender Kräfte vorzusehen.

Besonders eignet sich die Verwendung von hochfestem und/oder vergütetem Stahl für die verschiedenen Komponenten des Querträgerverbundes, zu denen im Wesentlichen die Luftfederträger, die Brückenteile sowie das Mittelteil gehören. Durch Ausnutzung des maximalen Abstandes zwischen den Rahmenlängsträgern und einer direkten Anbindung der Luftfederträger im unteren Bereich seitlich an die Brückenteile wird eine besonders geeignete Abstützung des Exzentrizitätsmoments der durch die Luftfedern in den Querträgerverbund eingeleiteten Kräfte erreicht.

Die Herstellung eines Querträgerverbundes aus den vorgenannten Komponenten, Luftfederhalter, Brückenteile sowie Mittelteil, die eine verhältnismäßig einfache Geometrie aufweisen, stellt zum einen eine kostengünstige technische Lösung dar und andererseits wird durch die erfindungsgemäße Ausführung eines Querträgerverbundes sichergestellt, dass innerhalb des Querträgerverbunds auch bei Auftreten hoher fahrdynamischer Belastungen nur geringe Spannungen hervorgerufen werden. In Folge der direkten Kraftübertragung im entsprechend den Platzverhältnissen weitest möglich auseinander liegenden Druck- und Zugpfad besitzt der Querträgerverbund eine maximale Steifigkeit, so dass die nach innen gerichtete Deformation der Rahmenlängsträger ebenso wie die damit verbundenen Spannungen im Rahmen gering gehalten werden. Eine Anpassung des erfindungsgemäß ausgeführten Querträgerverbunds an verschiedene Nutzfahrzeugtypen bzw Gewichtsklassen ist bei Bedarf unter Beibehaltung des grundsätzlichen Funktionsprinzips durch Wahl geeigneter Blechwandstärken für die Luftfederhalter, Brückenteile sowie das Mittelteil des Querverbunds leicht möglich.

In einer weiteren ganz speziellen Ausführungsform der Erfindung weisen die Brückenteile des Querträgerverbunds eine Anschlussstruktur auf, an der ein Panhardstab befestigbar ist. Der Panhardstab stellt hierbei eine Querstrebe dar, die die bei Verwendung von Luftfedern während der Fahrt auftretenden Seitenkräfte aufnimmt bzw. überträgt. Vorzugsweise erfolgt die Befestigung des Panhardstabes mit Hilfe entsprechender Verschraubungen, wobei die Schrauben in die als Bohrungen ausgeführte Anschlussstruktur des Brückenteils eingeführt werden.

Eine weitere besondere Gestaltung des erfindungsgemäßen Querträgerverbunds sieht vor, dass zumindest eines der Brückenteile ein wenigstens abschnittsweise U-förmiges Querschnittsprofil aufweist. Eine derartige Gestaltung des Querschnittsprofils stellt sicher, dass ein entsprechend ausgebildetes Brückenteil auch hohe Kräfte aufnehmen kann, ohne dass hierfür ein großer Bauraum benötigt wird. Genauso ist es denkbar, dass zumindest einer der Rahmenlängsträger im Bereich des Luftfederelements ein in Richtung einer Fahrzeugmittellängsachse geöffnetes U-Profil aufweist. Um eine verbesserte Krafteinleitung bzw. eine geringere Verformung der Rahmenlängsträger zu erreichen, ist es in diesem Zusammenhang besonders geeignet, Verstärkungselemente vorzusehen, die im Bereich der Luftfederhalter das U-Profil im Innenbereich zwischen den Schenkeln verstärken. Vorzugsweise wird ein derartiges Verstärkungselement in das U-Profil eingeschweißt. Vorteilhafterweise besteht das Verstärkungselement aus einer u-förmigen Rahmeneinlage und mehreren darin eingeschweißten Rippen. Dieses Verstärkungselement wird in den Rahmenlängsträger eingeschraubt.

Neben der Möglichkeit, das Brückenteil mit dem Mittelteil des Verbindungselements mit Hilfe von Schraubverbindungen zu befestigen, ist es alternativ oder in Ergänzung hierzu denkbar, für die Verbindungen Niet-, Klebe-, oder Schweißverbindungen vorzusehen. Genauso ist es selbstverständlich vorstellbar, zumindest eines der Brückenteile wenigstens teilweise als Gussteil zu fertigen. Wird das Brückenteil als Gussteil ausgeführt, so bietet es sich bevorzugt an, das Mittelteil durch Klemmung an dem Brückenteil zu befestigen, wobei als U-ProfilFlansche ausgeführte Anschlussbereiche des Mittelteils zu einem Steg einen Abkantwinkel größer oder kleiner als 90 Grad aufweisen und durch entsprechend geformte Klemmklötze über Keilschrägen mit den Brückenteilen verspannt werden.

Werden die Brückenteile dagegen mittels wenigstens einer Schweißverbindung an dem Mittelteil befestigt, erfolgt die Anbindung vorteilhafterweise einerseits mit Lochschweißungen im Seitenbereich der Brückenteile und andererseits mit einer stirnseitigen Schweißverbindung.

Der vorbeschriebene erfindungsgemäß ausgeführte Querträgerverbund eignet sich besonders für den Einsatz in Verbindung mit einer Vorderachse eines Nutzfahrzeugs. Genauso ist es allerdings denkbar, einen entsprechend ausgeführten Querträgerverbund für eine Luftgefederte Vor- und/oder Nachlaufachse eines insbesondere schweren Nutzfahrzeugs zu verwenden.

Im Nachfolgenden wird die Erfindung ohne Beschränkung des allgemeinen Erfindungsgedankens anhand von Ausführungsbeispielen unter Bezugnahme auf die Figuren näher erläutert.

Es zeigen:
- Fig. 1: Einbau eines Querträgerverbunds mit Federung und Dämpfung;
- Fig. 2: Querträgerverbund.

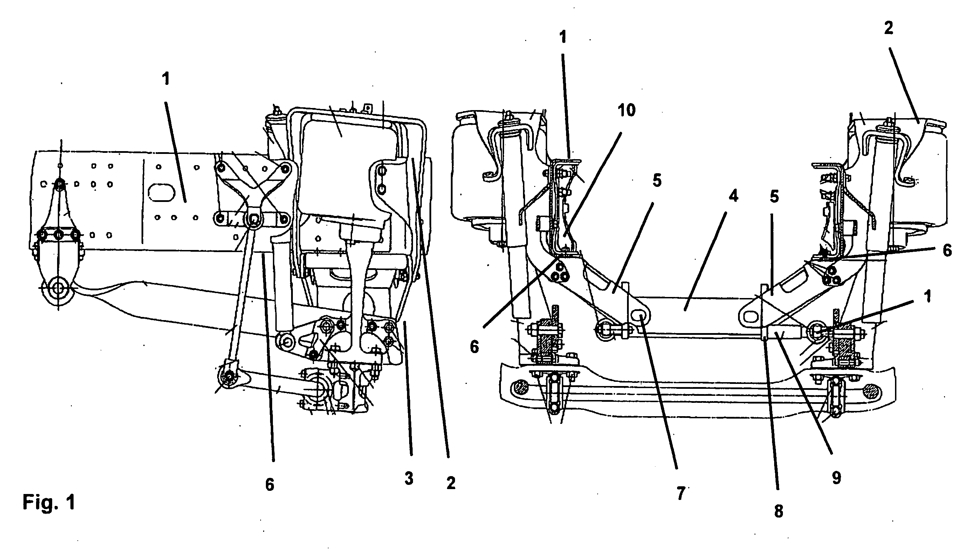

Fig. 1 zeigt in einer Front- und in einer Seitenansicht einen Querträgerverbund für ein luftgefedertes Nutzfahrzeug, das über zwei in Längsrichtung verlaufende Rahmenlängsträger 1 verfügt. An den Rahmenlängsträgern 1 sind seitlich an den Außenseiten jeweils Luftfederhalter 2 vorgesehen, die mittels Schraubverbindungen an den Rahmenlängsträgern 1 befestigt sind. Die Luftfederhalter 2 dienen hierbei im Wesentlichen zur Befestigung des sowohl ein Dämpfungselement als auch eine Luftfeder aufweisenden Federelements. Im Unteren Bereich der Luftfederhalter 2 sind diese über das Verbindungselement 3 miteinander verbunden. Das Verbindungselement 3 ist bei der in Fig. 1 dargestellten Ausführungsform einstückig ausgeführt, wobei die Brückenteile 5 und das Mittelteil 4 mit Hilfe der Schweißverbindungen 7, die im seitlichen Bereich der Bauteile vorgesehen sind, aneinander befestigt sind.

Die Brückenteile 5 sind in einem dem Mittelteil 4 abgewandten Bereich an den Luftfederhaltern 2 und jeweils am Untergurt 6 der Rahmenlängsträger 1 mittels Schraubverbindungen befestigt. Darüber hinaus verfügt das in Figur 1 in der Frontansicht dargestellte Brückenteil 5 auf der in Blickrichtung rechten Seite über eine Anschlussstruktur 8, an der ein Panhartstab 9, über den Seitenkräfte aufgenommen werden, befestigt ist.

Wesentlich bei der in Fig. 1 dargestellten Ausführungsform eines Querträgerverbundes ist, dass die Brückenteile 5 des Verbindungselementes 3 an ihren unterhalb des Fahrzeuglängsrahmens befindlichen seitlichen Bereichen mit dem Luftfederhalter 2 verbunden sind und gleichzeitig zwischen diesen Seitenwänden einen weitgehend ebenen Bereich aufweisen, der am Untergurt 6 der Rahmenlängsträger 1 anliegt. Dieser sich zwischen den Seitenwänden erstreckende, ebene Bereich der Brückenteile 5, der im Einbauzustand eben am Untergurt 6 der Rahmenlängsträger 1 anliegt, verfügt über entsprechende Bohrungen, über die der Brückenteil 5 mit dem Rahmenlängsträger 1 verschraubbar ist. Eine derartige Ausführungsform der Brückteile 5 stellt sicher, dass bei einer Krafteinleitung in den Querträgerverbund eine Krafteinleitung über die Abstützung der Brückenteile 5 am Untergurt 6 der Rahmenlängsträger 1 erfolgt. Darüber hinaus sind in den Rahmenlängsträgern 1, die einen U-förmigen Querschnitt aufweisen, Verstärkungselemente 10 vorgesehen, die jeweils in die Rahmenlängsträger 1 eingeschraubt sind und auf diese Weise die Steifigkeit der Rahmenlängsträger 1 im Bereich der Luftfederhalter 2 erhöhen.

Bei der Gestaltung des in Fig. 1 dargestellten Ausführungsbeispiel eines Querträgerverbunds ist insbesondere darauf geachtet worden, dass die einzelnen Komponenten des Verbindungselements 3, also die Brückenteile 5 sowie das Mittelteil 4, als gerade Bauteile ausgeführt sind und lediglich an den Knickpunkten, wie bspw. zwischen dem Mittelteil 4 und den Brückenteilen 5, Elemente zur Querabstützung vorgesehen sind. Werden etwa während der Fahrt eines Nutzfahrzeugs Kräfte von der Luftfederung in den Querträgerverbund eingeleitet, so erfolgt dies vornehmlich in dem Übergangsbereich zwischen den Luftfederhaltern 2 und den Brückenteilen 5 durch Schraubverbindungen die unter Ausnutzung der Scherkraftgrenze der Schraubverbindungen auf Schub belastet werden. Andererseits werden die Kräfte über mehrseitig ausgesteifte Membranflächen, wie sie bspw. innerhalb des Verbindungselements 3 vorgesehen sind, übertragen.

Die Übertragung des Exzentrizitätsmoments, das durch die Anbringung der Luftfedern an den Außenseiten der Rahmenlängsträger 1 hervorgerufen wird, erfolgt über die ebene Anlagefläche zwischen den Brückenteilen 5 und den jeweiligen Untergurten 6 der Rahmenlängsträger 1. Die in der Fig. 1 dargestellte Konstruktion besteht aus Elementen verhältnismäßig einfacher Geometrie und ist daher kostengünstig herstellbar. Darüber hinaus ist die Konstruktion derart ausgeführt, dass auch bei hohen fahrdynamischen Belastungen in den einzelnen Elementen des Querträgerverbunds nur geringe Spannungen auftreten. Das Exzentrizitätsmoment aus den Luftfederkräften wird somit an der Querverbund-Unterseite, auf der die Zugkräfte dominieren, über Verschraubungen, die die Scherbelastungen aus dem Seitenteil des außen liegenden Luftfederhalters 2 aufnehmen, in die an dieser Stelle zum Seitenteil parallelen Brückenteil-Seitenwände eingeleitet. Im oberen Bereich (Druckbereich) werden die Kräfte hingegen durch die Rahmenlängsträger 1 hindurch auf die in den Rahmenlängsträger 1 eingebauten Versteifungselemente 10 und weiter in die durch Abkantungen ausgesteifte Brückenteil-Oberseite übertragen.

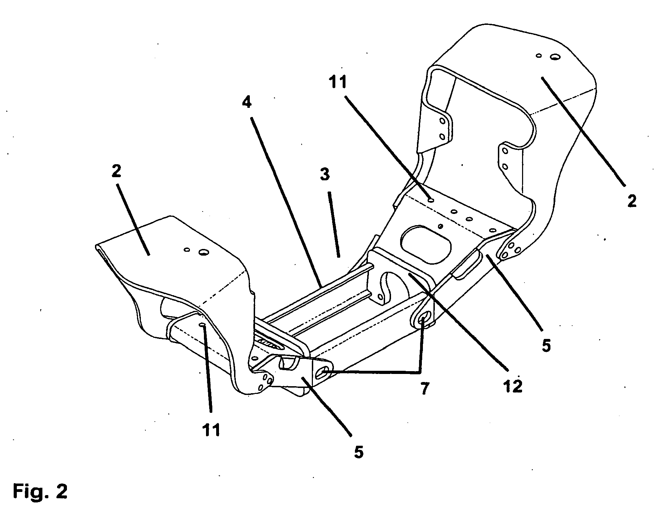

In der Fig. 2 ist das Verbindungselement eines Querträgerverbunds dargestellt, das aus einem Mittelteil 4 sowie beidseitig des Mittelteils angeordneten Brückenteilen 5 besteht. Im Endbereich der Brückenteile 5 sind Bohrungen 11 vorgesehen, mittels der die Brückenteile 5 am Untergurt 6 eines Rahmenlängsträgers 1 befestigbar sind. Das Mittelteil 4 weist an seinen beiden Enden Verstärkungselemente 12 auf, die der Versteifung des Mittelteiles 4 dienen. Das Mittelteil 4 sowie die beidseitig angeordneten Brückenteile 5 sind im Seitenbereich der Elemente mittels einer Lochschweißung 7 verbunden. Wie der Fig. 2 zu entnehmen ist, sind die wesentlichen Komponenten des Verbindungselements 3 bzw. des Mittelteils 4 sowie der Brückenteile 5 als geradlinige Bauteile ausgeführt, so dass diese einfach und kostengünstig herstellbar sind.

### Bezugszeichenliste

- 1: Rahmenlängsträger
- 2: Luftfederhalter
- 3: Verbindungselement
- 4: Mittelteil
- 5: Brückenteil
- 6: Untergurt
- 7: Schweißverbindung
- 8: Anschlussstruktur
- 9: Panhardstab
- 10: Verstärkungselement
- 11: Bohrungen
- 12: Verstärkungselement des Mittelteils

## Patentansprüche

1. Querträgerverbund für ein zumindest teilweise luftgefedertes Nutzfahrzeug mit zwei in Längsrichtung verlaufenden Rahmenlängsträgern (1), der über zwei jeweils an Außenseiten der Rahmenlängsträger (1) befestigte Luftfederhalter (2) sowie über ein unterhalb der Rahmenlängsträger (1) und annähernd in Querrichtung zu den Rahmenlängsträgern (1) verlaufendes Verbindungselement (3) verfügt, das die beiden Luftfederhalter (2) miteinander verbindet, wobei das Verbindungselement (3) ein Mittelteil (4) und zwei jeweils an gegenüberliegenden Enden des Mittelteils (4) befestigte Brückenteile (5) aufweist und die Brückenteile (5) in einem dem Mittelteil abgewandten Bereich an den Luftfederhaltern (2) befestigt sind, **dadurch gekennzeichnet, dass** die Brückenteile (5) zusätzlich jeweils am Untergurt (6) der Rahmenlängsträger (1) befestigt sind.

2. Querträgerverbund nach Anspruch 1, **dadurch gekennzeichnet, dass** zumindest eines der Brückenteile eine Anschlussstruktur (8) aufweist, an der ein Panhardstab (9) befestigbar ist.

3. Querträgerverbund nach Anspruch 1 oder 2, **dadurch gekennzeichnet, dass** zumindest eines der Brückenteile (5) ein wenigstens abschnittsweise U-förmiges Querschnittsprofil aufweist.

4. Querträgerverbund nach einem der Ansprüche 1 bis 3, **dadurch gekennzeichnet, dass** zumindest einer der Rahmenlängsträger (1) im Bereich des Luftfederelements (2) ein in Richtung einer Fahrzeugmittellängsachse geöffnetes U-Profil aufweist.

5. Querträgerverbund nach einem der Ansprüche 1 bis 4, **dadurch gekennzeichnet, dass** zumindest eines der Brückenteile (5) mittels wenigstens einer Schweiß-, Niet- und/oder Schraubverbindung (7) am Mittelteil (4) befestigt ist.

6. Querträgerverbund nach einem der Ansprüche 1 bis 5, **dadurch gekennzeichnet; dass** zumindest eines der Brückenteile (5) wenigstens teilweise als Gussteil gefertigt ist.

7. Querträgerverbund nach einem der Ansprüche 1 bis 6, dadurch gekennzeichet, dass im Bereich wenigstens eines der Federelemente auf einer dem Federelement abgewandten Seite des Rahmenlängsträgers (1) Verstärkungselemente (10) vorgesehen sind, die mit dem Rahmenlängsträger (1) verbunden sind.

8. Verwendung eines Querträgerverbunds nach einem der Ansprüche 1 bis 7 für eine Vorderachse eines Nutzfahrzeugs.

9. Verwendung eines Querträgerverbunds nach einem der Ansprüche 1 bis 7 für eine Vor- und/oder eine Nachlaufachse eines Nutzfahrzeugs.

10. Querträgerverbund nach einem der Ansprüche 1 bis 7, **dadurch gekennzeichnet, dass** das aus Mittelteil (4) und zwei Brückenteilen (5) gebildete Verbindungselement (3) als ein Gussteil ausgeführt wird.

## Claims

1. Cross member arrangement for a utility vehicle with at least partial pneumatic suspension and having two frame longitudinal members (1) running in the longitudinal direction, said cross member arrangement having two pneumatic spring holders (2) which are each fastened to the outer sides of the frame longitudinal members (1), and a connecting element (3) which runs below the frame longitudinal members (1) and approximately in the transverse direction with respect to the frame longitudinal members (1) and connects the two pneumatic spring holders (2) to each other, wherein the connecting element (3) has a central part (4) and two bridge parts (5) which are each fastened to opposite ends of the central part (4), and the bridge parts (5) are fastened in a region facing away from the central part to the pneumatic spring holders (2), **characterized in that** the bridge parts (5) are additionally each fastened to the lower boom (6) of the frame longitudinal members (1).

2. Cross member arrangement according to Claim 1, **characterized in that** at least one of the bridge parts has a connection structure (8) to which a Panhard rod (9) is fastenable.

3. Cross member arrangement according to Claim 1 or 2, **characterized in that** at least one of the bridge parts (5) has a cross-sectional profile which is U-shaped at least in sections.

4. Cross member arrangement according to one of Claims 1 to 3, **characterized in that** at least one of the frame longitudinal members (1) in the region of the pneumatic spring element (2) has a U profile which is open in the direction of a centre longitudinal axis of the vehicle.

5. Cross member arrangement according to one of Claims 1 to 4, **characterized in that** at least one of the bridge parts (5) is fastened to the central part (4) by means of at least one welded, riveted and/or screwed connection (7).

6. Cross member arrangement according to one of Claims 1 to 5, **characterized in that** at least one of the bridge parts (5) is at least partially manufactured as a cast part.

7. Cross member arrangement according to one of Claims 1 to 6, **characterized in that** reinforcing elements (10) are provided in the region of at least one of the spring elements on a side of the frame longitudinal member (1) that faces away from the spring element, said reinforcing elements being connected to the frame longitudinal member (1).

8. Use of a cross member arrangement according to one of Claims 1 to 7 for a front axle of a utility vehicle.

9. Use of a cross member arrangement according to one of Claims 1 to 7 for a leading and/or trailing axle of a utility vehicle.

10. Cross member arrangement according to one of Claims 1 to 7, **characterized in that** the connecting part (3) formed from the central part (4) and two bridge parts (5) is designed as a cast part.

## Revendications

1. Assemblage de traverse pour un véhicule utilitaire au moins en partie à suspension pneumatique, comprenant deux longerons de châssis (1) s'étendant dans la direction longitudinale, qui dispose de deux supports de suspension pneumatique (2) fixes chacun sur des côtés extérieurs du longerons de châssis (1) ainsi que d'un élément de liaison (3) s'étendant en dessous du longeron de châssis (1) et approximativement dans la direction transversale par rapport aux longerons de châssis (1) relie l'un à l'autre les deux supports de suspension pneumatique (2), lequel élément de liaison (3) l'élément de liaison (3) présentant une partie centrale (4) et deux parties de pont (5) fixées à chaque fois à des extrémités opposées de la partie centrale (4), et les parties de pont (5) étant fixées dans une région opposée à la partie centrale aux supports de suspension pneumatique (2), **caractérisé en ce que** les parties de pont (5) sont en outre à chaque fois fixées sur le tronçon inférieur (6) du longeron de châssis (1).

2. Assemblage de traverse selon la revendication 1, **caractérisé en ce qu'**au moins l'une des parties de pont présente une structure de raccordement (8) à laquelle peut être fixée une barre Panhard (9).

3. Assemblage de traverse selon la revendication 1 ou 2, **caractérisé en ce qu'**au moins l'une des parties de pont (5) présente un profil en section transversale au moins partiellement en forme de U.

4. Assemblage de traverse selon l'une quelconque des revendications 1 à 3, **caractérisé en ce qu'**au moins l'un des longerons de châssis (1) présente, dans la région de l'élément de suspension pneumatique (2) un profil en U ouvert dans la direction de l'axe longitudinal médial du véhicule.

5. Assemblage de traverse selon l'une quelconque des revendications 1 à 4, **caractérisé en ce qu'**au moins l'une des parties de pont (5) est fixée à la partie centrale (4) au moyen d'au moins une connexion soudée, rivetée et/ou vissée (7).

6. Assemblage de traverse selon l'une quelconque des revendications 1 à 5, **caractérisé en ce qu'**au moins l'une des parties de pont (5) est fabriquée au moins en partie sous forme de pièce coulée.

7. Assemblage de traverse selon l'une quelconque des revendications 1 à 6, **caractérisé en ce que** des éléments de renforcement (10) sont prévus dans la région d'au moins l'un des éléments de suspension sur un côté du longeron de châssis (1) opposé à l'élément de suspension, lesquels sont connectés au longeron de châssis (1).

8. Utilisation d'un assemblage de traverse selon l'une quelconque des revendications 1 à 7. pour un essieu avant d'un véhicule utilitaire.

9. Utilisation d'un assemblage de traverse selon l'une quelconque des revendications 1 à 7, pour un essieu avant et/ou suiveur d'un véhicule utilisateur.

10. Assemblage de traverse selon l'une quelconque des revendications 1 à 7, **caractérisé en ce que** l'élément de liaison (3) formé de la partie centrale (4) et de deux parties de pont (5) est réalisé sous forme d'une pièce coulée.
